# FASCICULE DE BREVET EUROPEEN

(11) **EP 4 014 309 B1**
(45) Date de publication et mention de la délivrance du brevet: **09.11.2022**
(21) Numéro de dépôt: 20786011.5
(22) Date de dépôt: 03.09.2020
(51) Int. Cl.: H02M 3/335, H02J 9/06

(54) **CIRCUIT DE MAINTIEN INDUCTIF**
INDUKTIVE HALTESCHALTUNG
INDUCTIVE HOLDING CIRCUIT

(30) Priorité: 03.09.2019 FR 1909666
(43) Date de publication de la demande: 22.06.2022
(73) Titulaire: Safran Electronics & Defense, 75015 Paris (FR)
(72) Inventeur: GRIMAUD, Louis, 77550 MOISSY-CRAMAYEL (FR)
(74) Mandataire: Regimbeau
(86) Numéro de dépôt international: PCT/FR2020/051531
(87) Numéro de publication internationale: WO 2021/044104

(56) Documents cités:
- US-A1- 2004 156 217
- US-A1- 2008 278 973
- US-A1- 2014 119 059
- US-A1- 2019 165 685

## Description

### Domaine technique

La présente invention se rapporte au domaine de l'électronique embarquée dans un aéronef, et plus précisément à un circuit de maintien d'alimentation électrique pour un calculateur.

Un calculateur embarqué dans un aéronef est alimenté en électricité par un réseau de l'aéronef, par exemple en 28 volts en courant continu ou 115 volts en réseau alternatif. Ce réseau est partagé avec d'autres équipements, qui se connectent dynamiquement au réseau ou sollicitent le réseau de manière discontinue. Le réseau présente donc fréquemment des microcoupures, c'est-à-dire des chutes brutales de tensions de faibles durées (par exemple inférieures à 10 ms sur un réseau continu et inférieures à 50 ms sur un réseau alternatif). Ces microcoupures se produisent fréquemment, typiquement toutes les 1 à 10 secondes.

Un calculateur étant un organe sensible pour la sécurité d'un aéronef, et susceptible d'être affecté négativement par les microcoupures, il est nécessaire d'assurer la continuité de l'alimentation électrique du calculateur, en particulier pour un calculateur servant au contrôle d'un moteur. Un calculateur embarqué est donc généralement associé à un circuit de maintien d'alimentation permettant de pallier les microcoupures de sorte que ses microcoupures sont transparentes pour le calculateur.

La solution conventionnellement retenue pour le circuit de maintien utilise des condensateurs haute capacité permettant un stockage d'énergie suffisant pour suppléer aux baisses de tension du réseau lors des microcoupures. Les condensateurs utilisés sont par exemple des condensateurs de type aluminium électrolytique ou de type tantale. Lors de la survenue d'une microcoupure, les condensateurs sont connectés afin de se déchargés sur un bus de tension alimentant le calculateur. Les condensateurs en absence de microcoupures.

Cette solution couramment utilisée présente toutefois plusieurs inconvénients. Tout d'abord, il s'agit d'une solution coûteuse en raison de la nécessité de disposer de condensateurs de grande capacité, en particulier lorsque des condensateurs au tantale gélifié sont utilisés. Ensuite, cette solution présente un fort encombrement, en particulier avec les condensateurs de type aluminium électrolytique. Les condensateurs nécessitent la mise en place d'une électronique de contrôle spécifique pour faire face aux nombreuses contraintes liées à l'utilisation des condensateurs (altitude, stockage électrique, courant de charge, etc.). En outre, la présence des condensateurs entraîne une complexité de l'interface avec l'alimentation du calculateur qui nécessite des organes de commande et de surveillance qui peuvent dégrader les caractéristiques électriques de l'alimentation et sa fiabilité. Dans un système embarqué, les intensités des courants de charge disponibles sont bornées, ce qui peut entraîner des temps de charge importants alors même que des microcoupures peuvent être temporellement rapprochées. De plus, les condensateurs sont des composants sujets au vieillissement, ce qui requiert de surveiller une éventuelle dégradation et de procéder à des remplacements réguliers, alourdissant la maintenance. Enfin, les condensateurs servant de réserve d'énergie sont généralement placés sur le réseau d'alimentation, et il n'est donc pas possible de sélectionner spécifiquement le maintien d'alimentation des seules charges dont il est nécessaire de maintenir la tension. Il en résulte une perte significative d'énergie, puisque des charges non essentielles voient leur alimentation être maintenue, entraînant un surdimensionnement des condensateurs et des performances médiocres de maintien de l'alimentation des charges critiques. Le document US2004156217 présente une solution alternative à la gestion des micro-coupures.

### Présentation de l'invention

L'invention vise à permettre de maintenir de manière sélective l'alimentation électrique d'un calculateur embarqué même en cas de microcoupures du réseau d'alimentation électrique au moyen d'un circuit simple et fiable, peu coûteux, de faible encombrement et nécessitant moins de maintenance par rapport aux circuits de maintien d'alimentation électrique utilisant des condensateurs de grande capacité.

A cet effet, l'invention propose un circuit de maintien d'alimentation électrique pour une charge alimentée via un convertisseur principal à partir d'un réseau d'alimentation présentant une tension d'alimentation, ledit circuit de maintien d'alimentation électrique comprenant un étage primaire et un étage secondaire, l'étage primaire comprenant :
- un convertisseur de tension connecté au réseau d'alimentation, et
- un enroulement primaire connecté au convertisseur de tension et configuré pour être alimenté par le convertisseur de tension,
l'étage secondaire comprenant :
- un enroulement secondaire faisant face à l'enroulement primaire de sorte que l'enroulement primaire et l'enroulement secondaire forment deux inductances couplées,
- un contrôleur de tension auquel est connecté l'enroulement secondaire, le contrôleur de tension étant connecté à la charge et étant configuré pour contrôler une tension aux bornes de la charge,
le circuit de maintien étant configuré de sorte que les sens des courants circulant dans l'enroulement primaire et dans l'enroulement secondaire sont inverses, et le convertisseur de tension est configuré pour stopper l'alimentation de l'enroulement primaire lorsque la tension d'alimentation est inférieure à une tension seuil et pour reprendre l'alimentation de l'enroulement primaire lorsque la tension d'alimentation est supérieure à une tension seuil.

Contrairement aux circuits de maintien d'alimentation électrique de l'état de la technique qui stockent de l'énergie sous forme capacitive, le circuit de de maintien d'alimentation électrique stocke l'énergie de manière inductive dans les enroulements (i.e. bobines) d'inductances couplées. Il en résulte un circuit de maintien plus réactif, moins onéreux, moins encombrant, et moins sujet au vieillissement, les enroulements étant beaucoup plus robustes que les condensateurs.

L'invention est avantageusement complétée par les différentes caractéristiques suivantes prises seules ou selon leurs différentes combinaisons possibles :
- le convertisseur de tension prend en entrée une mesure de tension primaire aux bornes de l'enroulement primaire et une mesure de courant primaire circulant dans l'enroulement primaire, le convertisseur de tension étant configuré pour contrôler la tension aux bornes de l'enroulement primaire et le courant primaire circulant dans l'enroulement primaire ;
- le convertisseur de tension est un convertisseur à découpage configuré pour commander des grilles de deux transistors en série en fonction de la mesure de tension primaire et de la mesure de courant ;
- le convertisseur de tension prend en compte une mesure de la tension d'alimentation
- le contrôleur de tension est un contrôleur à hystérésis ;
- le contrôleur de tension comprend un comparateur configuré pour comparer une tension aux bornes de la charge avec une tension de charge de référence ;
- le contrôleur de tension est configuré pour commander une grille d'un transistor de contrôle en fonction d'un résultat de comparaison, le transistor de contrôle étant monté en parallèle de l'enroulement secondaire ;
- l'étage secondaire comprend une première diode entre l'enroulement secondaire et une borne du transistor de contrôle, et une seconde diode entre la borne du transistor de contrôle et la charge.

L'invention concerne également un procédé de maintien de l'alimentation électrique d'une charge alimentée via un convertisseur principal par un réseau d'alimentation présentant une tension d'alimentation, la charge étant en outre connectée au réseau d'alimentation par l'intermédiaire d'un circuit de maintien d'alimentation électrique selon l'invention, dans lequel :
- lorsque la tension d'alimentation est supérieure à un seuil de sous-tension, le convertisseur de tension alimente l'enroulement primaire, la circulation de courant dans l'enroulement secondaire étant bloquée, et,
- lorsque la tension d'alimentation est inférieure à un seuil de sous-tension, le convertisseur de tension stoppe l'alimentation de l'enroulement primaire dans lequel la circulation de courant est bloquée, et le contrôleur de tension contrôle l'alimentation électrique de la charge par l'enroulement secondaire.

### Présentation des figures

D'autres caractéristiques, buts et avantages de l'invention ressortiront de la description qui suit, qui est purement illustrative et non limitative, et qui doit être lue en regard des dessins annexés sur lesquels :
- la figure 1 est un schéma électrique simplifié d'un circuit selon un mode de réalisation possible de l'invention ;
- la figure 2 est un schéma électrique montrant les détails d'un mode de réalisation possible de l'invention.
- la figure 3 est un autre schéma électrique montrant les détails d'un mode de réalisation possible de l'invention.

### Description détaillée

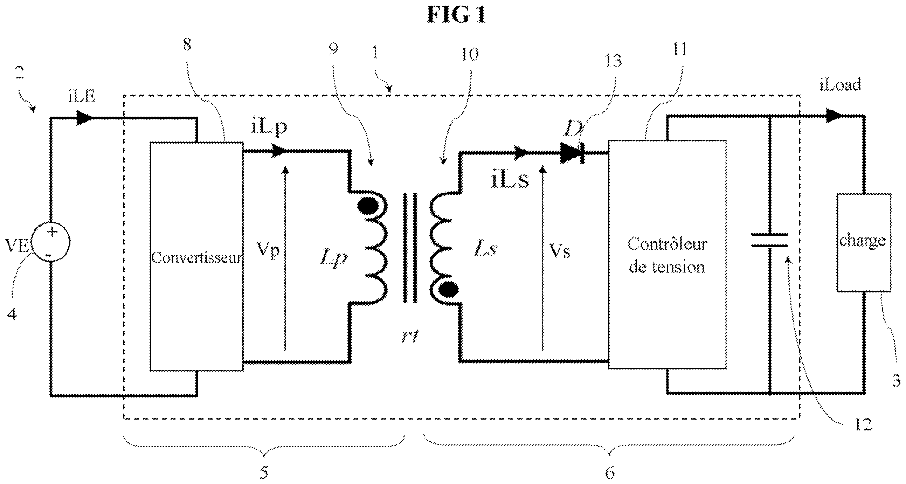

En référence à la figure 1, le circuit de maintien d'alimentation 1 est disposé entre le réseau d'alimentation 2 et la charge 3. Le réseau d'alimentation 1 est représenté par une source de tension 4 délivrant une tension d'alimentation VE à ses bornes auxquelles est connecté le circuit de maintien d'alimentation électrique 1. Un courant d'intensité iLE circule dans la connexion entre le réseau d'alimentation 2 et le circuit de maintien d'alimentation électrique 1. La charge 3 est ici représenté par une impédance Zload. Un courant d'intensité iLoad circule dans la connexion entre le circuit de maintien d'alimentation électrique 1 et la charge 3.

Le circuit de maintien d'alimentation électrique 1 est configuré pour maintenir l'alimentation électrique de la charge 3 lorsque l'alimentation électrique de la charge 3 par le réseau d'alimentation 1 présente une microcoupure. Plus précisément, le circuit de maintien d'alimentation électrique 1 est configuré pour maintenir aux bornes de la charge 3 une tension plus élevée que la tension d'alimentation VE lorsque la tension d'alimentation VE devient inférieure à un seuil de sous-tension UVD.

Le circuit de maintien d'alimentation électrique 1 comprend un étage primaire 5 et un étage secondaire 6, l'étage primaire 5 étant électriquement connecté au réseau d'alimentation 2, et l'étage secondaire 6 étant électriquement connecté à la charge 3.

L'étage primaire 5 comprend :
- un convertisseur de tension 8 connecté au réseau d'alimentation 2, et
- un enroulement primaire 9 connecté au convertisseur de tension 8 et configuré pour être alimenté électriquement par le convertisseur de tension 8.

Le convertisseur de tension 8 est configuré pour stopper l'alimentation de l'enroulement primaire 9 lorsque la tension d'alimentation VE est inférieure à un seuil de sous-tension UVD et pour reprendre l'alimentation électrique de l'enroulement primaire 9 lorsque la tension d'alimentation VE est supérieure à un seuil de sous-tension UVD. A cet effet, le convertisseur de tension 8 peut prendre en compte une mesure de la tension d'alimentation VE aux bornes du réseau d'alimentation 2.

Plus généralement, le convertisseur de tension 8 est configuré pour contrôler la tension aux bornes de l'enroulement primaire 9. A cet effet, le convertisseur de tension 8 peut prendre en entrée une mesure de tension primaire aux bornes de l'enroulement primaire 9 et une mesure de courant primaire iLp circulant dans l'enroulement primaire 9. Le contrôle de l'intensité du courant primaire iLp circulant dans l'enroulement primaire 9 correspond directement au contrôle de l'énergie inductive stockée dans l'enroulement primaire 9. Le contrôle de la tension primaire aux bornes de l'enroulement primaire 9 permet également de contrôler la dynamique (i.e. l'évolution) du courant primaire iLp, ce qui influe directement sur le compromis entre la vitesse de stockage de l'énergie inductive stockée dans l'enroulement primaire 9 et sur la puissance tirée par le convertisseur de tension 8 sur le réseau d'alimentation 2.

L'étage secondaire 6 comprend un enroulement secondaire 10 faisant face à l'enroulement primaire 9 de sorte que l'enroulement primaire 9 et l'enroulement secondaire 10 forment deux inductances couplées, avec un rapport de transformation rt correspondant au rapport entre l'inductance secondaire Ls de l'enroulement secondaire 10 et l'inductance primaire Lp de l'enroulement primaire 9. Le rapport de transformation rt est typiquement de 1, mais peut éventuellement être choisi différent de 1. Les valeurs de l'inductance primaire Lp et de l'inductance secondaire Ls sont choisies en fonction de l'énergie qu'il est souhaité de stocker, et donc en fonction de la consommation électrique de la charge 3. Par exemple, pour stocker 1 joule d'énergie, soit 100 W pendant 10 ms ou 5 W pendant 200 ms, il est possible de choisir pour chaque enroulement 8 inductances de 10 µH, pour un encombrement de seulement 320 cm² par 4,5 cm, donc bien moindre que les condensateurs haute capacités de l'état de la technique. Une tension secondaire Vs est présente aux bornes de l'enroulement secondaire 10.

L'étage secondaire 6 comprend également un contrôleur de tension 11 auquel est connecté l'enroulement secondaire 10, le contrôleur de tension 11 étant connecté à la charge 3 et étant configuré pour contrôler une tension aux bornes de la charge 3. De préférence, le contrôleur de tension est un contrôleur à hystérésis.

Les sens de circulation des courants dans l'enroulement primaire 9 et dans l'enroulement secondaire 10 sont imposés, et opposés l'un à l'autre, comme indiqué sur la figure par les positions opposées des points sur les enroulements 10, 9, contrairement à un transformateur. Le courant primaire iLp (d'intensité iLp positive) circulant depuis le convertisseur de tension 8 dans l'enroulement primaire 9 est imposé par le convertisseur de tension 8. Le courant primaire iLp peut être typiquement une consigne pour le convertisseur de tension 8.

Une première diode 13 (notée D) entre l'enroulement secondaire 10 et le contrôleur de tension 11 peut être utilisée pour imposer le sens du courant secondaire iLs (d'intensité iLs positive) circulant depuis l'enroulement secondaire 10 jusqu'au contrôleur de tension 11.

L'étage secondaire 6 peut également comprendre un condensateur 12 connecté au contrôleur de tension 11 en parallèle de la charge 3. Le condensateur 12, d'une capacité Cs, de l'étage secondaire 6 permet de découpler la charge 3 par rapport au contrôleur de tension 11, et remplit également une fonction de filtrage des perturbations hautes fréquences.

Le circuit de maintien d'alimentation électrique 1 a pour fonction de maintenir l'alimentation électrique de la charge 3 malgré la survenue de microcoupures. En absence de microcoupure, le circuit de maintien d'alimentation électrique 1 est dans une phase de charge contrôlée de l'enroulement primaire 9. La tension d'alimentation VE est à une valeur nominale, par exemple 28 volts en courant continu, supérieure à un seuil de sous-tension UVD. Le seuil de sous-tension UVD est de préférence compris entre 5% et 50% de la tension d'alimentation VE, et de préférence entre 10 % et 25 %. Le seuil de sous-tension UVD est typiquement inférieur à 10 V.

Le convertisseur de tension 8 impose le courant primaire iLp dans l'enroulement primaire 9, imposant la tension primaire Vp aux bornes de l'enroulement primaire 9 et l'énergie stockée dans cet enroulement primaire 9. En phase de charge, suite à une microcoupure, la tension primaire Vp dépend notamment des besoins de la charge 3 et des conditions du réseau d'alimentation 2. En régime établi, c'est-à-dire en l'absence de microcoupures et lorsque suffisamment d'énergie inductive a été stockée dans l'enroulement primaire 9, la circulation du courant primaire iLp dans l'enroulement primaire 9 est maintenue pour compenser les pertes.

La circulation du courant dans l'enroulement secondaire 10 est bloquée, à cause du sens imposé de circulation et du couplage des enroulements 9, 10. La charge 3 est alimentée par le réseau d'alimentation 2 via un convertisseur principal, typiquement à travers un convertisseur avec isolation galvanique.

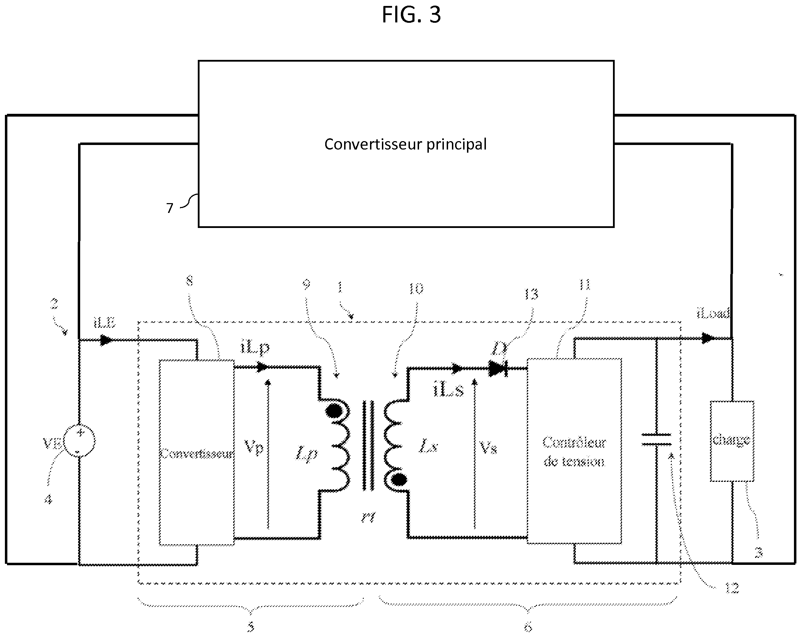

Le convertisseur principal peut faire partie d'une alimentation principale 7 (représentée en figure 3). L'alimentation principale est connectée en parallèle du circuit de réserve d'énergie inductive et fonctionne lorsque le réseau Ve est fonctionnel (en l'absence de micro-coupure). Cette alimentation principale peut mettre en œuvre n'importe quel type de convertisseurs à découpage isolés.

Au cours de cette phase de charge contrôlée de l'enroulement primaire 9, de l'énergie est stockée dans l'enroulement primaire 9 sous forme d'énergie inductive. Une fois que suffisamment d'énergie inductive a été stockée dans l'enroulement primaire 9 et en l'absence de microcoupures le circuit est en régime établi. Via le couplage des inductances, l'énergie inductive stockée dans l'enroulement primaire 9 sera transférée dans l'enroulement secondaire 10 dans la phase suivante.

Cette phase de charge contrôlée de l'enroulement primaire 9 et de régime établi subséquent dure aussi longtemps qu'il n'y a pas de microcoupures, et dure donc typiquement plus de 1 secondes, de préférence plus de 2 secondes, et de préférence encore plus de 3 secondes. Comme indiqué plus haut, la tension Vp aux bornes de l'enroulement primaire 9 tend vers zéro au cours de cette phase de charge contrôlée, afin de compenser les pertes naturelles. Les pertes sont du type résistive, magnétique (pertes fer, pertes alternatives). Ces pertes peuvent être modélisées par une résistance Rloss en série de l'enroulement primaire 9. En l'absence de tension suffisante pour compenser ces pertes, l'enroulement primaire 9 d'inductance Lp se décharge avec une dynamique en Lp/Rloss. La tension primaire Vp à appliquer en régime permanent est donc Rloss x iLp. Une tension primaire Vp faible est alors suffisante, la tension primaire Vp étant alors de préférence inférieure à moins de 2 volts, et de préférence encore inférieure à moins de 1 volts.

Lorsque se produit une microcoupure, la tension d'alimentation VE du réseau d'alimentation 2 descend sous le seuil de sous-tension UVD. Le circuit de maintien d'alimentation 1 passe alors dans une phase de décharge contrôlée de l'enroulement secondaire 10. Le convertisseur de tension 8 cesse alors la circulation du courant dans primaire iLp dans l'enroulement primaire 9. En revanche, le courant secondaire iLs circule dans l'enroulement secondaire 10, dans le sens imposé par la première diode 13. C'est le contrôleur de tension 11 qui contrôle, avec une régulation par correcteur proportionnel-intégral (PI) ou par une hystérésis, la tension aux bornes de la charge 3.

L'énergie qui a été stockée dans l'enroulement secondaire 10 lors de la phase de charge précédente est alors utilisée pour alimenter en électricité la charge 3, permettant ainsi de maintenir l'alimentation électrique de la charge 3 malgré la microcoupure.

Cette phase de décharge contrôlée de l'enroulement secondaire 10 dure aussi longtemps que de l'énergie est stockée et que la tension d'alimentation VE n'est pas repassé au-dessus d'une tension seuil, qui peut être la même que le seuil de sous-tension UVD utilisée pour passer dans la phase de décharge contrôlée de l'enroulement secondaire 10, ou qui peut en être différente. Lorsque la tension d'alimentation VE repasse au-dessus de la tension seuil, le circuit de maintien 1 repasse alors dans la phase de charge contrôlée de l'enroulement primaire 9, et la charge 3 est de nouveau alimentée par le réseau d'alimentation 2 via le convertisseur principal 7. Si toute l'énergie stockée est consommée au secondaire avant que la tension du réseau d'alimentation 2 ne soit remontée, alors le courant secondaire Ils sera devient nul et la tension secondaire tombe à 0V. La durée pendant laquelle la phase de décharge contrôlée peut être maintenue dépend donc de la charge. Il est néanmoins rappelé que le circuit de maintien 1 a pour vocation de pallier les seules microcoupures du réseau d'alimentation 2. Ainsi, la phase de décharge contrôlée de l'enroulement secondaire 10 dure typiquement moins de 100 ms, et de préférence moins de 60 ms, voire moins de 20 ms en courant continu.

Lorsque le circuit de maintien 1 repasse dans la phase de charge contrôlée de l'enroulement primaire 9, le convertisseur de tension 8 contrôle le courant primaire iLp circulant dans l'enroulement primaire 9 avec un compromis entre limitation du courant primaire iLp et rapidité de la recharge.

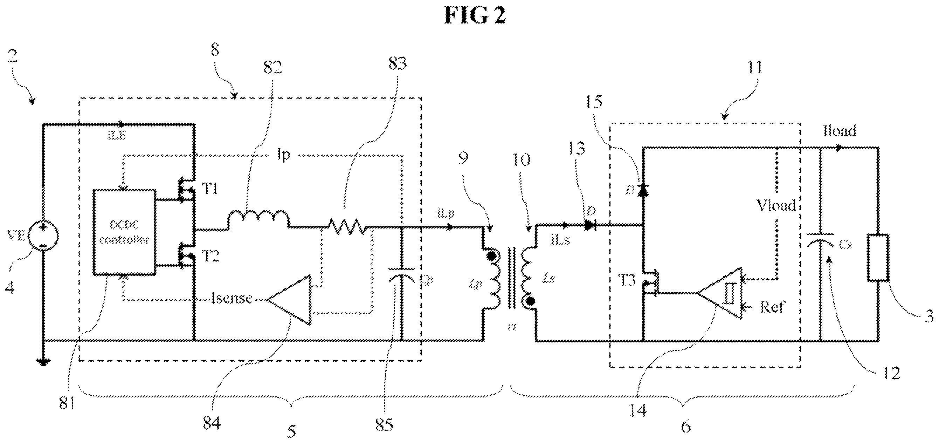

En référence à la figure 2 va maintenant être décrit plus en détail un exemple non limitatif d'un mode de réalisation possible, venant en complément du mode de réalisation décrit en référence à la figure 1. Ce mode de réalisation est donné à titre d'illustration non limitative dans le cas d'un réseau d'alimentation 2 en courant continu.

Dans ce mode de réalisation, le convertisseur de tension 8 comprend un organe de commande 81 connecté par deux voies dédiées aux grilles de deux transistors T1, T2 montés en série entre les bornes du réseau d'alimentation 2. Dans l'exemple de la figure 2, ces transistors T1, T2 sont des transistors à effet de champ à grille métal-oxyde (plus connu sous le terme de MOSFET) de type N, par exemple à enrichissement. Le drain du premier transistor T1 est connecté à une borne réseau d'alimentation 2, et la source du premier transistor T1 est connectée au drain du seconde transistor T2, dont la source est connectée à l'autre borne du réseau d'alimentation 2. Entre les deux transistors, c'est-à-dire au niveau de la source du premier transistor T1 et du drain du seconde transistor T2 est connecté une inductance 82 (ou bobine) visant à lisser le courant issu du découpage, et une résistance 83 connecté en série avec l'inductance 82 et avec une borne de l'enroulement primaire 9.

Une mesure de tension est effectuée à chaque borne de la résistance 83, et fournie à un comparateur 84, qui en déduit une mesure Isense du courant circulant à travers la résistance 83, représentative du courant primaire iLp circulant dans l'enroulement primaire. Une mesure de tension primaire Vp aux bornes de l'enroulement primaire 9 est également relevée et fournie à l'organe de commande 81.

Le contrôle de la tension aux bornes de l'enroulement primaire 9 et du courant primaire circulant dans l'enroulement primaire 9 par le convertisseur de tension 8 se fait via la commander des grilles de deux transistors T1, T2 en fonction de la mesure de tension primaire et de la mesure de courant. Le convertisseur de tension 8 est ici un convertisseur à découpage. D'autres types de convertisseur pourraient être utilisés dès lors qu'ils permettent de contrôler la tension aux bornes de l'enroulement primaire 9 et/ou l'intensité du courant circulant dans l'enroulement primaire 9. Un condensateur 85 (d'une capacité Cp) peut être connecté en parallèle de l'enroulement primaire 9 afin de filtrer les fluctuations haute fréquence du courant primaire iLp et de la tension primaire due à l'action de l'organe de commande 8 sur les transistors T1, T2. En outre, l'organe de commande 81 prend en compte une mesure de la tension d'alimentation VE, afin de détecter son passage en-dessous ou au-dessus du seuil de sous-tension UVD, et d'agir en conséquence sur les transistors T1, T2.

Dans l'étage secondaire 6, le contrôleur de tension 11 un transistor de contrôle T3 dont une borne est connectée à l'enroulement secondaire 10 et l'autre borne est connectée à la première diode 13, qui est connectée en série avec l'enroulement secondaire 10. Dans l'exemple de la figure 2, le transistor de contrôle T3 est un transistor à effet de champ à grille métal-oxyde (plus connu sous le terme de MOSFET) de type N, par exemple à enrichissement. C'est alors le drain du transistor de contrôle T3 qui est connecté à la cathode de la première diode 13, tandis que c'est la source du transistor de contrôle T3 qui est connectée à l'enroulement secondaire 10.

Le contrôleur de tension 11 comprend un comparateur 14 configuré pour comparer une mesure Vload de la tension aux bornes de la charge 3 avec une tension de charge de référence ref, et pour commander la grille du transistor de contrôle T3 en fonction de cette comparaison. C'est le comparateur 14 qui présente l'hystérésis du contrôleur de tension 11. Plus précisément, la sortie du comparateur 14 commandant la grille du transistor de contrôle T3 dépend du sens dans lequel la tension de mesure Vload franchit la tension de référence Vref. Le seuil constitué par la tension de référence Vref est ainsi modulé en fonction de la valeur de la tension de mesure Vload. Le comparateur peut par exemple être une bascule de Schmitt ou un amplificateur opérationnel.

A la cathode de la première diode 13 et au drain du transistor de contrôle T3 est connectée une seconde diode 15, notée D, entre la borne du transistor de contrôle T3 et la charge 3. L'anode de la seconde diode 15 est donc connectée à la cathode de la première diode 13 et au drain du transistor de contrôle T3, et la cathode de la seconde diode 15 est connectée à une borne de la charge 3 et à une borne du condensateur 12 connecté en parallèle de la charge 3. La première diode 13 et la seconde diode 15 permettent de s'assurer du sens du courant circulant non seulement dans l'enroulement secondaire 10, mais également dans le transistor de contrôle T3.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention.

## Revendications

1. Circuit (1) de maintien d'alimentation électrique pour une charge (3) alimentée via un convertisseur principal à partir d'un réseau d'alimentation (2) présentant une tension d'alimentation (VE), ledit circuit (1) de maintien d'alimentation électrique comprenant un étage primaire (5) et un étage secondaire (6), l'étage primaire (5) comprenant :
- un convertisseur de tension (8) connecté au réseau d'alimentation (2), et
- un enroulement primaire (9) connecté au convertisseur de tension (8) et configuré pour être alimenté par le convertisseur de tension (8),
l'étage secondaire (6) comprenant :
- un enroulement secondaire (10) faisant face à l'enroulement primaire (9) de sorte que l'enroulement primaire et l'enroulement secondaire forment deux inductances couplées,
- un contrôleur de tension (11) auquel est connecté l'enroulement secondaire (10), le contrôleur de tension étant connecté à la charge (3) et étant configuré pour contrôler une tension aux bornes de la charge,
le circuit de maintien étant configuré de sorte que les sens des courants circulant dans l'enroulement primaire et dans l'enroulement secondaire sont inverses, et le convertisseur de tension est configuré pour stopper l'alimentation de l'enroulement primaire lorsque la tension d'alimentation est inférieure à une tension seuil (UVD) et pour reprendre l'alimentation de l'enroulement primaire lorsque la tension d'alimentation est supérieure à une tension seuil.

2. Circuit (1) de maintien d'alimentation électrique selon la revendication 1, dans lequel le convertisseur de tension (8) prend en entrée une mesure de tension primaire aux bornes de l'enroulement primaire (9) et une mesure de courant primaire circulant dans l'enroulement primaire, le convertisseur de tension étant configuré pour contrôler la tension aux bornes de l'enroulement primaire et le courant primaire circulant dans l'enroulement primaire.

3. Circuit (1) de maintien d'alimentation électrique selon la revendication 2, dans lequel le convertisseur de tension (8) est un convertisseur à découpage configuré pour commander des grilles de deux transistors (T1, T2) en série en fonction de la mesure de tension primaire et de la mesure de courant.

4. Circuit (1) de maintien d'alimentation électrique selon l'une quelconque des revendications précédentes, dans lequel le convertisseur de tension (8) prend en compte une mesure de la tension d'alimentation (VE).

5. Circuit (1) de maintien d'alimentation électrique selon l'une quelconque des revendications précédentes, dans lequel le contrôleur de tension (11) est un contrôleur à hystérésis.

6. Circuit (1) de maintien d'alimentation électrique selon l'une quelconque des revendications précédentes, dans lequel le contrôleur de tension (11) comprend un comparateur (14) configuré pour comparer une tension aux bornes de la charge avec une tension de charge de référence.

7. Circuit (1) de maintien d'alimentation électrique selon l'une quelconque des revendications précédentes, dans lequel le contrôleur de tension (11) est configuré pour commander une grille d'un transistor de contrôle (T3) en fonction d'un résultat de comparaison, le transistor de contrôle étant monté en parallèle de l'enroulement secondaire (10).

8. Circuit (1) de maintien d'alimentation électrique selon la revendication précédente, dans lequel l'étage secondaire (6) comprend une première diode (13) entre l'enroulement secondaire (10) et une borne du transistor de contrôle (T3), et une seconde diode (15) entre la borne du transistor de contrôle (T3) et la charge (3).

9. Procédé de maintien de l'alimentation électrique d'une charge (3) alimentée via un convertisseur principal par un réseau d'alimentation (2) présentant une tension d'alimentation (VE), la charge (3) étant en outre connectée au réseau d'alimentation (2) par l'intermédiaire d'un circuit (1) de maintien d'alimentation électrique selon l'une quelconque des revendications précédentes, dans lequel :
- lorsque la tension d'alimentation est supérieure à un seuil de sous-tension, le convertisseur de tension (8) alimente l'enroulement primaire (9), la circulation de courant dans l'enroulement secondaire (10) étant bloquée, et,
- lorsque la tension d'alimentation est inférieure à un seuil de sous-tension, le convertisseur de tension (8) stoppe l'alimentation de l'enroulement primaire (9) dans lequel la circulation de courant est bloquée, et le contrôleur de tension (11) contrôle l'alimentation électrique de la charge (3) par l'enroulement secondaire (10).

## Patentansprüche

1. Stromversorgungshalteschaltung (1) für eine Last (3), die über einen Hauptwandler ausgehend von einem Versorgungsnetz (2) versorgt wird, das eine Versorgungsspannung (VE) aufweist, wobei die Stromversorgungshalteschaltung (1) eine Primärstufe (5) und eine Sekundärstufe umfasst (6), wobei die Primärstufe (5) Folgendes umfasst:
- einen Spannungswandler (8), der mit dem Versorgungsnetz (2) verbunden ist, und
- eine Primärwicklung (9), die mit dem Spannungswandler (8) verbunden ist und dazu ausgestaltet ist, von dem Spannungswandler (8) versorgt zu werden,
wobei die Sekundärstufe (6) Folgendes umfasst:
- eine Sekundärwicklung (10), welche der Primärwicklung (9) derart gegenübersteht, dass die Primärwicklung und die Sekundärwicklung zwei gekoppelte Induktivitäten bilden,
- einen Spannungsregler (11), mit dem die Sekundärwicklung (10) verbunden ist, wobei der Spannungsregler mit der Last (3) verbunden ist und dazu ausgestaltet ist, eine Spannung an den Anschlüssen der Last zu regeln,
wobei die Halteschaltung derart ausgestaltet ist, dass die Richtungen der Ströme, die in der Primärwicklung und in der Sekundärwicklung fließen, umgekehrt sind, und der Spannungswandler dazu ausgestaltet ist, die Versorgung der Primärwicklung anzuhalten, wenn die Versorgungsspannung niedriger als eine Schwellenspannung (UVD) ist, und die Versorgung der Primärwicklung wieder aufzunehmen, wenn die Versorgungsspannung höher als eine Schwellenspannung ist.

2. Stromversorgungshalteschaltung (1) nach Anspruch 1, wobei der Spannungswandler (8) am Eingang eine Messung der Primärspannung an den Anschlüssen der Primärwicklung (9) und eine Messung des in der Primärwicklung fließenden Primärstroms vornimmt, wobei der Spannungswandler dazu ausgestaltet ist, die Spannung an den Anschlüssen der Primärwicklung und den Primärstrom, der in der Primärwicklung fließt, zu regeln.

3. Stromversorgungshalteschaltung (1) nach Anspruch 2, wobei der Spannungswandler (8) ein Schaltwandler ist, der dazu ausgestaltet ist, die Gates von zwei Transistoren (T1, T2) in Reihe in Abhängigkeit von der Primärspannungsmessung und der Strommessung zu steuern.

4. Stromversorgungshalteschaltung (1) nach einem der vorhergehenden Ansprüche, wobei der Spannungswandler (8) eine Messung der Versorgungsspannung (VE) berücksichtigt.

5. Stromversorgungshalteschaltung (1) nach einem der vorhergehenden Ansprüche, wobei der Spannungsregler (11) ein Hystereseregler ist.

6. Stromversorgungshalteschaltung (1) nach einem der vorhergehenden Ansprüche, wobei der Spannungsregler (11) einen Komparator (14) umfasst, der dazu ausgestaltet ist, eine Spannung an den Anschlüssen der Last mit einer Bezugslastspannung zu vergleichen.

7. Stromversorgungshalteschaltung (1) nach einem der vorhergehenden Ansprüche, wobei der Spannungsregler (11) dazu ausgestaltet ist, ein Gate eines Regelransistors (T3) in Abhängigkeit von einem Vergleichsergebnis zu steuern, wobei der Regeltransistor mit der Sekundärwicklung (10) parallel geschaltet ist.

8. Stromversorgungshalteschaltung (1) nach dem vorhergehenden Anspruch, wobei die Sekundärstufe (6) eine erste Diode (13) zwischen der Sekundärwicklung (10) und einem Anschluss des Regeltransistors (T3) und eine zweite Diode (15) zwischen dem Anschluss des Regeltransistors (T3) und der Last (3) umfasst.

9. Verfahren zum Halten der Stromversorgung einer Last (3), die über einen Hauptwandler von einem Versorgungsnetz (2) versorgt wird, das eine Versorgungsspannung (VE) aufweist, wobei die Last (3) ferner über eine Stromversorgungshalteschaltung (1) nach einem der vorhergehenden Ansprüche mit dem Versorgungsnetz (2) verbunden ist, wobei:
- wenn die Versorgungsspannung höher als eine Unterspannungsschwelle ist, der Spannungswandler (8) die Primärwicklung (9) versorgt, wobei der Stromfluß in der Sekundärwicklung (10) gesperrt wird, und,
- wenn die Versorgungsspannung niedriger als eine Unterspannungsschwelle ist, der Spannungswandler (8) die Versorgung der Primärwicklung (9) anhält, in welcher der Stromfluss gesperrt wird, und der Spannungsregler (11) die Stromversorgung der Last (3) über die Sekundärwicklung (10) regelt.

## Claims

1. A power supply maintaining circuit (1) for a load (3) supplied via a main converter from a supply network (2) having a supply voltage (VE), said power supply maintaining circuit (1) comprising a primary stage (5) and a secondary stage (6), the primary stage (5) comprising :
- a voltage converter (8) connected to the supply network (2), and
- a primary winding (9) connected to the voltage converter (8) and configured to be powered by the voltage converter (8)
the secondary stage (6) comprising :
- a secondary winding (10) facing the primary winding (9) such that the primary winding and the secondary winding form two coupled inductances,
- a voltage controller (11) to which the secondary winding (10) is connected, the voltage controller being connected to the load (3) and being configured to control a voltage across the load
the hold circuit being configured such that the directions of the currents flowing in the primary winding and the secondary winding are opposite, and the voltage converter is configured to stop supplying power to the primary winding when the supply voltage is less than a threshold voltage (UVD) and to resume supplying power to the primary winding when the supply voltage is greater than a threshold voltage.

2. The power supply maintaining circuit (1) of claim 1, wherein the voltage converter (8) takes as inputs a measurement of primary voltage across the primary winding (9) and a measurement of primary current flowing in the primary winding, the voltage converter being configured to control the voltage across the primary winding and the primary current flowing in the primary winding.

3. The power supply maintaining circuit (1) of claim 2, wherein the voltage converter (8) is a switched-mode converter configured to control gates of two transistors (T1, T2) in series as a function of the primary voltage measurement and the current measurement.

4. The power supply maintaining circuit (1) according to any one of the preceding claims, wherein the voltage converter (8) takes into account a measurement of the supply voltage (VE).

5. The power supply maintaining circuit (1) according to any one of the preceding claims, wherein the voltage controller (11) is a hysteresis controller.

6. The power supply maintaining circuit (1) according to any one of the preceding claims, wherein the voltage controller (11) comprises a comparator (14) configured to compare a voltage across the load with a reference load voltage.

7. The power supply maintaining circuit (1) according to any one of the preceding claims, wherein the voltage controller (11) is configured to control a gate of a monitor transistor (T3) in accordance with a comparison result, the monitor transistor being connected in parallel to the secondary winding (10).

8. The power supply maintaining circuit (1) according to the preceding claim, wherein the secondary stage (6) comprises a first diode (13) between the secondary winding (10) and a terminal of the control transistor (T3), and a second diode (15) between the terminal of the control transistor (T3) and the load (3).

9. A method of maintaining the electrical supply to a load (3) supplied via a main converter by a supply network (2) having a supply voltage (VE), the load (3) also being connected to the supply network (2) via an electrical supply maintaining circuit (1) according to any one of the preceding claims, in which :
- when the supply voltage is above an undervoltage threshold, the voltage converter (8) supplies the primary winding (9), the current flow in the secondary winding (10) being blocked, and,
- when the supply voltage is below an undervoltage threshold, the voltage converter (8) stops the supply to the primary winding (9) in which the current flow is blocked, and the voltage controller (11) controls the power supply to the load (3) via the secondary winding (10) .
